(19) Europäisches Patentamt / European Patent Office / Office européen des brevets

(11) **EP 4 723 742 A1**

(12) **EUROPEAN PATENT APPLICATION**
published in accordance with Art. 153(4) EPC

(43) Date of publication:
**08.04.2026 Bulletin 2026/15**

(21) Application number: **23938846.5**

(22) Date of filing: **31.05.2023**

(51) International Patent Classification (IPC):
*H04W 40/00* (2009.01)    *H04W 72/0446* (2023.01)

(52) Cooperative Patent Classification (CPC):
**H04L 5/00; H04L 5/0023; H04L 5/0048;
H04L 5/0094; H04W 40/00;** H04B 7/06952

(86) International application number:
**PCT/CN2023/097424**

(87) International publication number:
**WO 2024/243854 (05.12.2024 Gazette 2024/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Quectel Wireless Solutions Co., Ltd.
Shanghai 201601 (CN)**

(72) Inventors:
• ZHAO, Zheng
  **Shanghai 201601 (CN)**
• LYU, Ling
  **Shanghai 201601 (CN)**
• YANG, Zhongzhi
  **Shanghai 201601 (CN)**

(74) Representative: **Fish & Richardson P.C.
Highlight Business Towers
Mies-van-der-Rohe-Straße 8
80807 München (DE)**

(54) **WIRELESS COMMUNICATION METHOD AND COMMUNICATION APPARATUS**

(57) Disclosed are a wireless communication method and a communications apparatus. The wireless communication method includes: transmitting/receiving, by a terminal device, a first pilot signal, where a resource for transmitting/receiving the first pilot signal is determined based on first information, and the first information is used to indicate a correspondence between one or more beam sweeping directions and one or more time domain locations.

```
┌──────────────┐                    ┌──────────────┐
│ Base station │                    │   Terminal   │
│              │                    │    device    │
└──────┬───────┘                    └──────┬───────┘
       │                                   │
       │      S310: First pilot signal     │
       │◄─────────────────────────────────►│
       │                                   │
```

FIG. 3

## Description

TECHNICAL FIELD

The present application relates to the field of communications technologies, and more specifically, to a wireless communication method and a communications apparatus.

BACKGROUND

In a communications system (for example, a new radio (new radio, NR) system), in a case that a terminal device and a base station do not know a relative direction between the terminal device and the base station, a pilot signal may be transmitted/received in a beam sweeping manner. For example, in a case that the terminal device does not access the base station, the terminal device and the base station may transmit/receive a pilot signal in a beam sweeping manner. However, transmitting/receiving the pilot signal in this manner may cause some problems, for example, low resource utilization, a long receiving delay, and increased device power consumption.

SUMMARY

The present application provides a wireless communication method and a communications apparatus. Various aspects involved in the present application are described below.

According to a first aspect, a wireless communication method is provided, including: transmitting/receiving, by a terminal device, a first pilot signal, where a resource for transmitting/receiving the first pilot signal is determined based on first information, and the first information is used to indicate a correspondence between one or more beam sweeping directions and one or more time domain locations.

According to a second aspect, a wireless communication method is provided, including: receiving, by a base station, a first pilot signal transmitted by a terminal device, or transmitting a first pilot signal to a terminal device, where a resource for receiving/transmitting the first pilot signal is determined based on first information, and the first information is used to indicate a correspondence between one or more beam sweeping directions and one or more time domain locations.

According to a third aspect, a wireless communication method is provided, including: receiving, by a positioning device in a core network, first information, where the first information is used to indicate a correspondence between one or more beam sweeping directions and one or more time domain locations.

According to a fourth aspect, a communications apparatus is provided. The communications apparatus is a terminal device. The communications apparatus includes: a communications module, transmitting/receiving a first pilot signal, where a resource for transmitting/receiving the first pilot signal is determined based on first information, and the first information is used to indicate a correspondence between one or more beam sweeping directions and one or more time domain locations.

According to a fifth aspect, a communications apparatus is provided. The communications apparatus is a base station. The communications apparatus includes: a communications module, transmitting/receiving a first pilot signal, where a resource for transmitting/receiving the first pilot signal is determined based on first information, and the first information is used to indicate a correspondence between one or more beam sweeping directions and one or more time domain locations.

According to a sixth aspect, a communications apparatus is provided. The communications apparatus is a positioning device in a core network. The communications apparatus includes: a first receiving module, receiving first information, where the first information is used to indicate a correspondence between one or more beam sweeping directions and one or more time domain locations.

According to a seventh aspect, a communications apparatus is provided, and includes a processor, a memory, and a communications interface. The memory is configured to store one or more computer programs. The processor is configured to invoke the computer program in the memory, to cause the communications apparatus to execute some or all of steps described in the method according to any one of the first aspect to the third aspect.

According to an eighth aspect, an embodiment of the present application provides a communications system, and the system includes the foregoing communications apparatus. In another possible design, the system may further include another device that interacts with the communications apparatus in the solutions provided in embodiments of the present application.

According to a ninth aspect, an embodiment of the present application provides a computer-readable storage medium. The computer-readable storage medium stores a computer program. The computer program enables a computer to perform some or all of steps in the method according to the foregoing aspects.

According to a tenth aspect, an embodiment of the present application provides a computer program product. The computer program product includes a non-transitory computer-readable storage medium storing a computer program, and the computer program is operable to enable a computer to perform some or all of steps in the method according to the foregoing aspects. In some implementations, the computer program product may be a software installation package.

According to an eleventh aspect, an embodiment of the present application provides a chip. The chip includes a memory and a processor. The processor may invoke a computer program from the memory and run the computer program, to implement some or all of steps described in the method according to the foregoing aspects.

In embodiments of the present application, a resource for transmitting/receiving a first pilot signal is determined based on first information. In this way, a terminal device and a base station may transmit/receive, in a specific time domain location based on the same correspondence, a first pilot signal in a direction corresponding to the time domain location, to avoid transmitting/receiving the first pilot signal in a beam sweeping manner, thereby improving resource utilization, reducing a receiving delay, reducing device power consumption, and the like.

BRIEF DESCRIPTION OF THE DRAWINGS

FIG. 1 is an example diagram of a system architecture of a wireless communications system to which an embodiment of the present application is applicable.
FIG. 2 is a schematic diagram of positioning measurement performed based on the communications system shown in FIG. 1.
FIG. 3 is a schematic flowchart of a wireless communication method according to an embodiment of the present application.
FIG. 4 is an example diagram of a correspondence between a beam sweeping direction and a time domain location according to an embodiment of the present application.
FIG. 5 is an example diagram of a group of terminal devices using the same group of correspondences according to an embodiment of the present application.
FIG. 6 is a schematic flowchart of a wireless communication method according to another embodiment of the present application.
FIG. 7 is an example diagram of configured pilot resource vacancy according to an embodiment of the present application.
FIG. 8 is a schematic flowchart of a wireless communication method according to still another embodiment of the present application.
FIG. 9 is a schematic diagram of a structure of a communications apparatus according to an embodiment of the present application.
FIG. 10 is a schematic diagram of a structure of a communications apparatus according to another embodiment of the present application.
FIG. 11 is a schematic diagram of a structure of a communications apparatus according to still another embodiment of the present application.
FIG. 12 is a schematic diagram of a structure of an apparatus according to an embodiment of the present application.

DETAILED DESCRIPTION OF THE EMBODIMENTS

The technical solutions in the present application are described below with reference to the accompanying drawings. For ease of understanding, the following first introduces related technologies and related terms in the present application with reference to the accompanying drawings. It should be understood that descriptions of the related technologies or related terms are a part of the technical solutions of the present application, and may be randomly combined with the technical solutions of the present application.

Architecture of a communications system

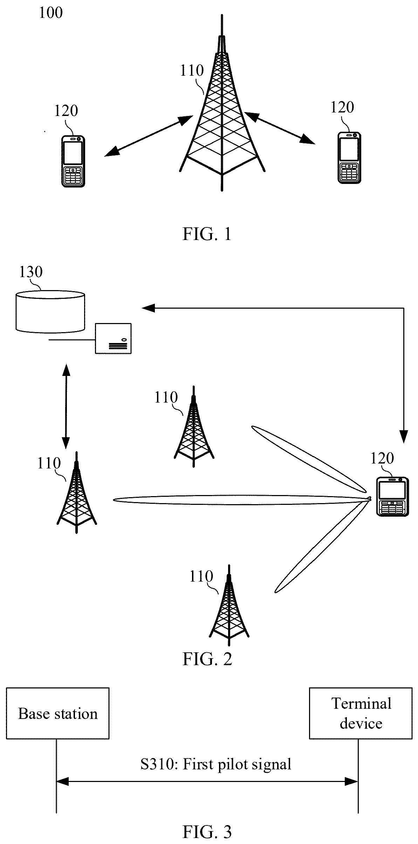

FIG. 1 is an example diagram of a system architecture of a wireless communications system 100 to which an embodiment of the present application is applicable. The wireless communications system 100 may include a base station 110 and a terminal device 120. The base station 110 may be a device in communication with the terminal device 120. The base station 110 may provide communication coverage for a specific geographic area, and may communicate with the terminal device 120 located within the coverage.

FIG. 1 exemplarily shows one base station and two terminal devices. Optionally, the wireless communications system 100 may include a plurality of base stations, and another quantity of terminal devices may be included in a coverage range of each base station. This is not limited in embodiments of the present application.

Optionally, the wireless communications system 100 may further include another network entity such as a network controller or a mobility management entity. This is not limited in embodiments of the present application.

The technical solutions in embodiments of the present application may be applied to various communications systems, for example, a global system for mobile communications (global system of mobile communication, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an advanced long term evolution (advanced long term evolution, LTE-A) system, a new radio (new radio, NR) system, an evolved system of an NR system, an LTE-based access to unlicensed spectrum (LTE-based access to unlicensed spectrum, LTE-U) system, an NR-based access to unlicensed spectrum (NR-based access to unlicensed spectrum, NR-U) system, a non-terrestrial network (non-terrestrial networks, NTN) system, a universal mobile telecommunications system (universal mobile telecommunication system, UMTS), a wireless local area network (wireless local area networks, WLAN), wireless fidelity (wireless fidelity, WiFi), a fifth generation (5th-generation, 5G) system, or another communications system, for example, a future communications system such as a sixth generation mobile communications system or a satellite communications system.

Generally, a quantity of connections supported by a conventional communications system is limited, and is also easy to implement. However, with development of communication technologies, a mobile communications system not only supports conventional communication, but also supports, for example, device-to-device (device to device, D2D) communication, machine-to-machine (machine to machine, M2M) communication, machine-type communication (machine type communication, MTC), vehicle-to-vehicle (vehicle to vehicle, V2V) communication, or vehicle-to-everything (vehicle to everything, V2X) communication. Embodiments of the present application may also be applied to these communications systems.

The communications system in embodiments of the present application may be applied to a carrier aggregation (carrier aggregation, CA) scenario, a dual connectivity (dual connectivity, DC) scenario, or a standalone (standalone, SA) networking scenario.

The communications system in embodiments of the present application may be applied to an unlicensed spectrum, and the unlicensed spectrum may also be considered as a shared spectrum. Alternatively, the communications system in embodiments of the present application may be applied to a licensed spectrum, and the licensed spectrum may also be considered as a dedicated spectrum.

Embodiments of the present application may be applied to an NTN system, or may be applied to a terrestrial communications network (terrestrial networks, TN) system. As an example rather than limitation, the NTN system includes an NR-based NTN system and an Internet of things (internet of things, IoT)-based NTN system. For example, in an NTN access scenario of narrow band Internet of things (narrow band internet of things, NB-IoT) and enhanced machine type communication (enhanced machine type communication, eMTC), a system including an IoT terminal device and an NTN network may be understood as an IoT-based NTN system.

The terminal device in embodiments of the present application may also be referred to as a user equipment (user equipment, UE), an access terminal, a subscriber unit, a subscriber station, a mobile site, a mobile station (mobile station, MS), a mobile terminal (mobile terminal, MT), a remote station, a remote terminal, a mobile device, a user terminal, a terminal, a wireless communications device, a user agent, or a user apparatus. The terminal device in embodiments of the present application may be a device providing a user with voice and/or data connectivity and may be configured to connect people, objects, and machines, such as a handheld device or vehicle-mounted device having a wireless connection function. The terminal device in embodiments of the present application may be a mobile phone (mobile phone), a tablet computer (Pad), a notebook computer, a palmtop computer, a mobile Internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. Optionally, the UE may be configured to function as a base station. For example, the UE may function as a scheduling entity, which provides a sidelink signal between UEs in V2X, D2D, or the like. For example, a cellular phone and a vehicle communicate with each other by using a sidelink signal. A cellular phone and a smart home device communicate with each other, without relay of a communication signal through a base station.

The base station in embodiments of the present application may be a device for communicating with the terminal device. The base station may alternatively be referred to as an access network device or a wireless access network device. The base station in embodiments of the present application may be a radio access network (radio access network, RAN) node (or device) that connects the terminal device to a wireless network. The base station may broadly cover various names below, or may be replaced with the following names, such as a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master MeNB, a secondary SeNB, a multi-standard radio (MSR) node, a home base station, a network controller, an access node, a wireless node, an access point (access point, AP), a transmission node, a transceiver node, a baseband unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof. Alternatively, the base station may be a communications module, a modem, or a chip disposed in the device or the apparatus described above. Alternatively, the base station may be a mobile switching center, a device that functions as a base station in device to device D2D, vehicle-to-everything (vehicle-to-everything, V2X), and machine-to-machine (machine-to-machine, M2M) communication, a network-side device in a 6G network, a device that functions as a base station in a future communications system, or the like. The base station may support networks of the same access technology or different access technologies. A specific technology and a specific device form used by the base station are not limited in embodiments of the present application.

The base station may be stationary, or may be mobile. For example, a helicopter or an unmanned aerial vehicle may be configured to function as a mobile base station, and one or more cells may move according to a location of the mobile base station. In other examples, a helicopter or an unmanned aerial vehicle may be configured to function as a device in communication with another base station.

In some deployments, the base station in embodiments of the present application may be a CU or a DU, or the base station includes a CU and a DU. The gNB may further include an AAU.

The base station and the terminal device may be deployed on land, including being indoors or outdoors, handheld, or vehicle-mounted, may be deployed on a water surface, or may be deployed on a plane, a balloon, or a satellite in the air. In embodiments of the present application, scenarios in which the base station and the terminal device are located are not limited.

It should be understood that all or part of the functions of the communications device in the present application may also be implemented by software functions running on hardware, or by virtualization functions instantiated on a platform (such as a cloud platform).

Positioning technology in a communications system

With reference to FIG. 2, a communications system 100 may further include a positioning device 130. The positioning device 130 may be configured to determine location information of a terminal device. The positioning device 130 may be located in a core network. The positioning device 130 may sometimes be referred to as a positioning server. An NR system is used as an example. The positioning device 130 may be a location management function (location management function, LMF). Another communications system is used as an example. The positioning device 130 may be a location management unit (location management unit, LMU), a location management center (location management center, LMC), or an evolved serving mobile location center (evolved serving mobile location center, E-SMLC). It may be understood that, the positioning device 130 may alternatively be another network element, node, or device for determining the location information of the terminal device, for example, may be a network element or node in a future communications system for determining the location information of the terminal device. A name of the positioning device is not specifically limited in embodiments of the present application.

Positioning in the communications system 100 includes uplink positioning and downlink positioning. In some communications systems (such as the NR system), downlink positioning is performed based on a positioning reference signal (positioning reference signal, PRS). The PRS, also referred to as a downlink positioning reference signal (downlink positioning reference signal, DL-PRS), is a reference signal for a positioning function. For example, in a downlink positioning process, the terminal device 120 may first measure a PRS transmitted by a serving cell and a neighboring cell (or a neighbor cell), and estimate related information of positioning measurement. Then the terminal device 120 may report the related information of the positioning measurement to the positioning device 130 as a measurement result of the PRS. The positioning device 130 may calculate a location of the terminal device 120 based on the related information that is of the positioning measurement and that is reported by the terminal device 120, to obtain the location information of the terminal device 120. For example, the positioning device 130 may calculate the location information of the terminal device 120 based on a trilateration method or a triangulation method.

In some communications systems (for example, the NR system), uplink positioning is performed based on a sounding reference signal (sounding reference signal, SRS). For example, in an uplink positioning process, the terminal device 120 transmits an SRS. The base station 110 (a base station of a serving cell and a base station of a neighboring cell) may obtain a measurement result based on the SRS transmitted by the terminal. The measurement result of the SRS may include related information of positioning measurement. The base station 110 may then transmit the related information of the positioning measurement to the positioning device 130. The positioning device 130 may calculate a location of the terminal device 120 based on the related information that is of the positioning measurement and that is reported by the base station 110, to obtain the location information of the terminal device 120. For example, the positioning device 130 may calculate the location information of the terminal device 120 based on a trilateration method or a triangulation method.

In some embodiments, that the communications system performs uplink positioning based on an SRS may include that the communications system performs uplink positioning based on an SRS used for positioning (SRS-Pos).

In some embodiments, when the terminal device transmits the SRS, a specific SRS resource on which the SRS is to be transmitted is determined based on spatial relationship information associated with the SRS. Therefore, in some embodiments, a network side may configure one or more SRS resources for the terminal device, and the one or more SRS resources may be associated with different spatial relationship information. SRS-Pos is used as an example. In Rel-16, the network side may configure a plurality of SRS-Pos resources for the terminal device, and different SRS-Pos resources are associated with different spatial relationship information.

In some embodiments, the spatial relationship information associated with the SRS is related to the location of the terminal device. In other words, the spatial relationship information associated with the SRS may be determined based on the location of the terminal device. In a case that the terminal device and the base station do not know a relative direction between the terminal device and the base station, how to determine a resource for transmitting an SRS or how to transmit/receive an SRS is a problem that needs to be resolved. In a possible implementation, the base station may perform SRS (for example, SRS-Pos) beam sweeping to ensure that an SRS can be received in the serving cell and the neighboring cell.

The above related information of positioning measurement may include one or more of the following information: time information, distance information, power information, or angle information. More specifically, the related information of positioning measurement may include one or more of the following information: a time difference of arrival (time difference of arrival, TDOA), an angle difference of arrival (angle difference of arrival, ADOA), a reference signal received power (reference signal receive power, RSRP), or the like.

Low power terminal device

The communications system may support a plurality of types of terminal devices. For example, some communications systems (for example, an NR system) may support a low power user equipment (low power UE, LPUE) that is also referred to as a low power UE.

The low power UE may be understood as a UE implemented by using a technology for reducing energy consumption of a device without reducing communication quality. A low power UE technology is conductive to reducing power consumption of a device, prolonging a battery life of the device, and providing longer endurance for a device such as a smart wearable device and an Internet of things. In addition, the low power UE technology is further conductive to improving a network capacity and a coverage area and improving network performance and user experience.

In some embodiments, the low power UE may include, for example, a low power high accuracy positioning (low power high accuracy positioning, LPHAP) UE.

In some embodiments, the low power UE may include, for example, a reduced capability (reduced capability, RedCap) UE. In some embodiments, the RedCap UE may also be referred to as a low-capability UE.

In some embodiments, the low power UE may include, for example, a terminal device that has low requirements for a data transmission rate and a bandwidth, such as a sensor or a wearable device.

As described above, in some communications systems (for example, an NR system), in a case that the terminal device and the base station do not know a relative direction between the terminal device and the base station, how to determine a resource for transmitting/receiving a pilot signal (for example, an SRS or a PRS) or how to transmit/receive a pilot signal is a problem that needs to be resolved. For example, in a case that the terminal device does not access the base station, how to determine a resource for transmitting/receiving a pilot signal or how to transmit/receive a pilot signal should be determined.

Embodiments of the present application do not limit a scenario in which the terminal device does not access the base station. The low power UE is used as an example. When the low power UE moves between cells, to reduce power consumption caused by cell access, the low power UE may not perform cell access. In other words, the low power UE may not access the base station when moving between cells. Then, when the low power UE moves to a new cell and/or performs cell reselection, a spatial relationship of the UE may change accordingly, and the spatial relationship may need to be updated. In this case, how to determine a resource for transmitting/receiving a pilot signal without cell access is a problem that needs to be resolved.

In a possible implementation, the terminal device and the base station may determine, in a beam sweeping manner, a resource for transmitting/receiving a pilot signal. However, transmitting/receiving the pilot signal in this manner may cause some problems, for example, low resource utilization, a long receiving delay, and increased device power consumption.

In an example, if a network side configures a plurality of resources for each terminal device (for example, a low power UE) for transmitting/receiving a pilot signal, for example, the network side configures a plurality of SRS resources for each terminal device for transmitting/receiving an SRS, in this case, the network side needs to reserve a large quantity of resources, causing low resource utilization. In addition, at least one of the terminal device or the base station needs to perform beam sweeping on each resource, and pilot signals in a plurality of periods need to be received in each time of beam sweeping. This causes a long receiving delay. In addition, during beam sweeping, there may be no corresponding receiver (for example, a base station) to receive a pilot signal in some beam sweeping directions for transmitting the pilot signal, which wastes resources in these directions and further increases device power consumption.

To resolve the foregoing problem, embodiments of the present application provide a wireless communication method and a communications apparatus. A resource for transmitting/receiving a pilot signal can be determined based on a correspondence between a beam sweeping direction and a time domain location (that is, first information below), to avoid transmitting/receiving a pilot signal in a beam sweeping manner. This is conductive to improving resource utilization, reducing a receiving delay, reducing device power consumption, and the like. The method embodiments of the present application are described below in detail with reference to the drawings.

FIG. 3 is a schematic flowchart of a wireless communication method according to an embodiment of the present application. The method shown in FIG. 3 is described from a perspective of interaction between a terminal device and a base station. The terminal device and the base station may be, for example, the terminal device 120 and the base station 110 shown in FIG. 1. The method shown in FIG. 3 may include step S310. The following describes the step.

In step S310, the terminal device transmits/receives a first pilot signal.

In some embodiments, the terminal device may transmit the first pilot signal, for example, transmit the first pilot signal to the base station.

In some embodiments, the terminal device may receive the first pilot signal, for example, receive the first pilot signal transmitted by the base station.

In some embodiments, when the terminal device transmits the first pilot signal, the first pilot signal may be an uplink pilot signal, for example, an SRS.

In some embodiments, when the terminal device receives the first pilot signal, the first pilot signal may be a downlink pilot signal, for example, a PRS.

In some embodiments, the first pilot signal may also be referred to as a first reference signal. In other words, in embodiments of the present application, a pilot signal and a reference signal may be replaced with each other. The following uses a pilot signal as an example for description.

A type of the first pilot signal is not limited in embodiments of the present application. The first pilot signal may be any type of pilot signal. For example, the first pilot signal may be a pilot signal used for channel estimation. Alternatively, the first pilot signal may be a pilot signal used for positioning. Alternatively, the first pilot signal may be a pilot signal used for calibration, or the like.

For example, the first pilot signal may include one or more of the following signals: an SRS, a PRS, a channel state information reference signal (channel state information reference signal, CSI-RS), a tracking reference signal (tracking reference signal, TRS), a synchronization signal block (synchronization signal block, SSB), a cell reference signal (cell reference signal, CRS), a demodulation reference signal (demodulation reference signal, DRS), a physical broadcast channel (physical broadcast channel, PBCH), a primary synchronization signal (primary synchronization signal, PSS), or a secondary synchronization signal (secondary synchronization signal, SSS).

In some embodiments, when the first pilot signal includes an SRS, the SRS may be any type of SRS. For example, the first pilot signal may be a periodic SRS, an aperiodic SRS, or a semi-persistent SRS (semi-persistent SRS). Alternatively, the first pilot signal may be an SRS-Pos. Alternatively, the first pilot signal may be an SRS other than an SRS-Pos or the like.

In some embodiments, when the first pilot signal includes a PRS, the PRS may be any type of PRS. For example, the first pilot signal may be a periodic PRS, an aperiodic PRS, or an on-demand PRS (on-demand PRS).

Certainly, when the first pilot signal includes another signal (for example, a CSI-RS or an SSB), the another signal may alternatively be of any type. For brevity, details are not described herein.

In some embodiments, a resource (also referred to as a pilot resource) for transmitting/receiving the first pilot signal is determined based on the first information.

In some embodiments, a resource for transmitting/receiving the first pilot signal may include one or more of the following resources: a time resource, a frequency resource, a space resource, a code resource, or the like. In an example, the first information may be used to determine a time resource for transmitting/receiving the first pilot signal, for example, a specific time domain location at which the first pilot signal is transmitted/received. In another example, the first information may be used to determine a frequency resource location for transmitting/receiving the first pilot signal, for example, a specific frequency domain location at which the first pilot signal is transmitted/received. In still another example, the first information may be used to determine a space resource for transmitting/receiving the first pilot signal, for example, a specific beam (a space relationship) on which the first pilot signal is transmitted/received.

In some embodiments, the first information may be associated with or related to a beam sweeping direction of a pilot signal (for example, the first pilot signal). In other words, the first information may be used to indicate the beam sweeping direction of the pilot signal.

In some embodiments, the first information may be associated with or related to the beam sweeping direction of the pilot signal and a time domain location. For example, the first information may be used to indicate a correspondence (also referred to as an association relationship) between one or more beam sweeping directions and one or more time domain locations. In some embodiments, the one or more beam sweeping directions indicate one or more beam sweeping directions corresponding to a pilot signal (for example, the first pilot signal).

In this embodiment of the present application, the resource for transmitting/receiving the first pilot signal is determined based on the first information. In this way, the terminal device and the base station may transmit/receive, in a specific time domain location based on the same correspondence, the first pilot signal in a direction corresponding to the time domain location, to avoid transmitting/receiving the first pilot signal in a beam sweeping manner, thereby improving resource utilization, reducing a receiving delay, reducing device power consumption, and the like.

For example, for the first pilot signal transmitted by the terminal device, even if the base station does not know a direction of the terminal device, the base station does not need to receive the first pilot signal (for example, a plurality of periodic signals) in different directions. In other words, the base station does not need to perform beam sweeping, and may receive the first pilot signal in a corresponding direction based on the first information, thereby improving resource utilization, reducing a receiving delay, reducing device power consumption, and the like.

Alternatively, for the first pilot signal transmitted by the base station, even if the terminal device does not know a direction of the base station, the terminal device does not need to receive the first pilot signal in different directions. In other words, the terminal device does not need to perform beam sweeping, and may receive the first pilot signal in a corresponding direction based on the first information, thereby improving resource utilization, reducing a receiving delay, reducing device power consumption, and the like.

The following describes the first information in more detail.

In some embodiments, the first information may be determined based on reference information of the first information. For example, the first information may be determined based on the reference information according to a rule specified in a protocol.

In some embodiments, the first information may be determined by the terminal device and/or the base station based on the reference information according to the rule specified in the protocol.

Specific content of the reference information is not limited in an embodiment of the present application, provided that the reference information can be used to determine the first information, or provided that the reference information can be used to determine a correspondence between a beam sweeping direction and a time domain location. For example, the reference information may be positioning-related information of the terminal device, device information of the terminal device, or network information of a serving cell or a neighboring cell.

In some embodiments, the first information may include a correspondence for the neighboring cell and/or a correspondence for the serving cell. In other words, the first information may include a correspondence between one or more beam sweeping directions and one or more time domain locations for the neighboring cell, and/or may include a correspondence between one or more beam sweeping directions and one or more time domain locations for the serving cell.

In some embodiments, the first information may include related indication information indicating whether the correspondence for the neighboring cell and the correspondence for the serving cell are based on the same reference information. In other words, the first information may include first indication information, and the first indication information is used to indicate whether the correspondence for the neighboring cell is based on the same reference information as that for the serving cell. For example, the first information may be used to indicate that the neighboring cell and the serving cell determine the first information (also referred to as determine the correspondences) based on the same reference information. Alternatively, the first information may be used to indicate that the neighboring cell and the serving cell determine the first information based on different reference information.

In some embodiments, the first information may directly indicate the correspondence between the one or more beam sweeping directions and the one or more time domain locations. For example, the first information may include the correspondence between the one or more beam sweeping directions and the one or more time domain locations.

In some embodiments, the first information may indirectly indicate the correspondence between the one or more beam sweeping directions and the one or more time domain locations. For example, the first information may include the correspondence between the one or more beam sweeping directions and the one or more pilot resources (may be briefly referred to as resources). This is because the one or more pilot resources may include a time domain location corresponding to the one or more pilot resources, that is, a specific time domain location at which the one or more pilot resources may be used to transmit a pilot signal. Therefore, the correspondence between the one or more beam sweeping directions and the one or more time domain locations may be determined based on a correspondence between the one or more beam sweeping directions and the one or more pilot resources.

In some embodiments, the first information may include both the correspondence between the one or more beam sweeping directions and the one or more time domain locations, and the correspondence between the one or more beam sweeping directions and the one or more pilot resources. For example, in a case that the first information is used to indicate or configure a plurality of groups of correspondences, a part of correspondences in the plurality of groups of correspondences may include the correspondence between the one or more beam sweeping directions and the one or more time domain locations, and another part of correspondences in the plurality of groups of correspondences may include the correspondence between the one or more beam sweeping directions and the one or more pilot resources.

For each beam sweeping direction, the terminal device can determine, based on the correspondence between the one or more beam sweeping directions and the one or more time domain locations, a specific time domain location at which a pilot signal corresponding to each beam sweeping direction should be transmitted/received. Correspondingly, the base station can also determine, based on the correspondence between the one or more beam sweeping directions and the one or more time domain locations, a specific beam sweeping direction in which a corresponding pilot signal needs to be received/transmitted at each time domain location.

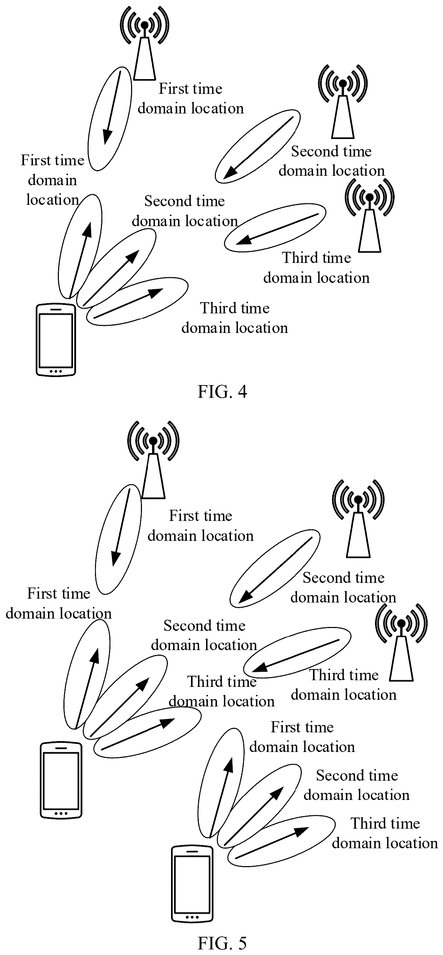

For the correspondence between the one or more beam sweeping directions and the one or more time domain locations mentioned above, reference may be made to an example in FIG. 4. In the example in FIG. 4, oval boxes represent different time domain locations, and different arrows in the oval boxes represent different beam sweeping directions. The different beam sweeping directions correspond to the different time domain locations, so that beams in different directions are respectively transmitted at different time domain locations. In a specific example, the terminal device may transmit a beam in a 0° direction at a first time domain location (first time unit), where the beam is used to transmit a pilot signal (such as an SRS); transmit a beam in a 30° direction at a second time domain location, where the beam is used to transmit a pilot signal; transmit a beam in a 60° direction at a third time domain location, where the beam is used to transmit a pilot signal; and by analogy, transmit a beam in a 360° direction at a twelfth time domain location, where the beam is used to transmit a pilot signal. Correspondingly, on the base station side, the base station may receive the pilot signal in a 180° direction at the first time domain location; receive the pilot signal in a 210° direction at the second time domain location; and receive the pilot signal in a 240° direction at the third time domain location; and by analogy, receive the pilot signal in a 150° direction at the twelfth time domain location. Through such processing, it can be ensured that alignment of a receive beam and a transmit beam can be implemented at each time domain location.

In embodiments of the present application, the beam sweeping direction may be any direction, for example, 0°, 15°, or 30°.

In addition, a spacing between different beam sweeping directions is not specifically limited in an embodiment of the present application. For example, the foregoing example is described by using a 30° spacing as an example. However, the embodiment of the present application is not limited thereto. For example, the spacing between different beam sweeping directions may alternatively be another value such as 15° or 60°. The spacing may be specifically set according to an actual situation.

In some embodiments, the correspondence between the one or more beam sweeping directions and the one or more time domain locations may be a one-to-one correspondence. For example, a first beam sweeping direction corresponds to the first time domain location, a second beam sweeping direction corresponds to the second time domain location, and a third beam sweeping direction corresponds to the third time domain location. However, an embodiment of the present application is not limited thereto. For example, the correspondence between the one or more beam sweeping directions and the one or more time domain locations may be a one-to-many correspondence. In an example, a first beam sweeping direction corresponds to the first time domain location and the second time domain location. In this way, at both the first time domain location and the second time domain location, the terminal device can transmit/receive the first pilot signal in the first beam sweeping direction.

In some embodiments, the correspondence between the one or more beam sweeping directions and the one or more pilot resources may be a one-to-one correspondence. For example, a first beam sweeping direction corresponds to a first resource, a second beam sweeping direction corresponds to a second resource, and a third beam sweeping direction corresponds to a third resource. However, an embodiment of the present application is not limited thereto. For example, the correspondence between the one or more beam sweeping directions and the one or more pilot resources may be a one-to-many correspondence. In an example, a first beam sweeping direction corresponds to a first resource and a second resource. In this way, at both a time domain location corresponding to the first resource and a time domain location corresponding to the second resource, the terminal device can transmit/receive the first pilot signal in the first beam sweeping direction.

In some embodiments, the correspondence between the one or more beam sweeping directions and the one or more pilot resources may be indicated by using a correspondence between the one or more beam sweeping directions and one or more resource sequence numbers (resource IDs). An SRS resource is used as an example. The correspondence between the one or more beam sweeping directions and one or more SRS resources may be indicated by using the one or more beam sweeping directions and one or more SRS resource IDs.

In some embodiments, the resource ID may be used to uniquely identify a resource.

In some embodiments, the resource ID is carried when the base station allocates a resource to the terminal device.

It should be understood that, in some embodiments, the beam sweeping direction means a direction (also referred to as a spatial direction, an angle, or the like) in which a pilot signal is transmitted/received, for example, a direction of transmitting/receiving the first pilot signal. For example, the beam sweeping direction means a direction of transmitting a pilot signal. In an example, when the beam sweeping direction is 30°, it indicates that a pilot signal is transmitted in the direction of about 30°. In another example, when the beam sweeping direction is 90°, it indicates that a pilot signal is transmitted in the direction of about 90°. For example, the beam sweeping direction means a direction of receiving a pilot signal. In an example, when the beam sweeping direction is 30°, it indicates that a pilot signal is received in the direction of about 30°. In another example, when the beam sweeping direction is 90°, it indicates that a pilot signal is received in the direction of about 90°.

In some embodiments, the beam sweeping direction may also be replaced with another term such as a beam transmitting/receiving direction, a beam transmitting/receiving angle, a beam sweeping angle, a beam transmitting direction, a beam receiving direction, a beam transmitting angle, or a beam receiving angle. This is not limited in embodiments of the present application.

It should be further understood that, in some embodiments, the time domain location may also be replaced with another term such as a time or a time unit. This is not limited in embodiments of the present application. For example, that the first information may be used to indicate the correspondence between the one or more beam sweeping directions and the one or more time domain locations may be replaced with a case in which the first information may be used to indicate a correspondence between the one or more beam sweeping directions and one or more times (time units).

A unit of the time domain location is not specifically limited in embodiments of the present application. For example, the time domain location may include one or more of the following: a subframe, a slot, or a symbol.

A source of the first information is not limited in embodiments of the present application. In some embodiments, the first information may be configured by the base station. In other words, the first information may be transmitted by the base station to the terminal device. For example, the base station may transmit the first information to the terminal device by using higher layer signalling (such as radio resource control (radio resource control, RRC) signalling). Alternatively, the base station may transmit the first information to the terminal device by using broadcast signalling. Alternatively, the base station may transmit the first information to the terminal device by using system information. In some embodiments, the first information may be predefined or preconfigured in a protocol.

In some embodiments, as specified by the base station or the protocol, the one or more beam sweeping directions correspond to the one or more time domain locations (or the one or more pilot resources) in order, for example, the one or more beam sweeping directions correspond to the one or more time domain locations (or the one or more pilot resources) in order. Subsequently, the terminal device may transmit/receive a pilot signal based on the same (or fixed) correspondence. For example, the terminal device may transmit/receive a pilot signal sequentially based on the same correspondence.

In some embodiments, a quantity of beam sweeping directions in the correspondence indicated by the first information may be equal to a quantity of resources configured for the terminal device by a network side. For example, the correspondence indicated by the first information includes four beam sweeping directions (which are 0°, 30°, 60°, and 90°, respectively), and a quantity of resources configured by the network side for the terminal device is also four (for example, a resource 1, a resource 2, a resource 3, and a resource 4). In this case, the beam sweeping directions may be in a one-to-one correspondence with the configured resources. For example, the beam sweeping direction of 0° corresponds to the resource 1, the beam sweeping direction of 30° corresponds to the resource 2, the beam sweeping direction of 60° corresponds to the resource 3, and the beam sweeping direction of 90° corresponds to the resource 4.

In some embodiments, a quantity of beam sweeping directions in the correspondence indicated by the first information may be less than a quantity of resources configured for the terminal device by a network side. For example, the correspondence indicated by the first information includes three beam sweeping directions (which are 0°, 30°, and 60°, respectively), and a quantity of resources configured by the network side for the terminal device is four (for example, a resource 1, a resource 2, a resource 3, and a resource 4). In this case, the beam sweeping directions may also be in a one-to-one correspondence with the configured resources. For example, the beam sweeping direction of 0° corresponds to the resource 1, the beam sweeping direction of 30° corresponds to the resource 2, and the beam sweeping direction of 60° corresponds to the resource 3; or the beam sweeping direction of 0° corresponds to the resource 2, the beam sweeping direction of 30° corresponds to the resource 3, and the beam sweeping direction of 60° corresponds to the resource 4; or the like.

In other words, when the quantity of beam sweeping directions in the correspondence indicated by the first information is less than the quantity of resources configured for the terminal device by the network side, the beam sweeping directions may be in a one-to-one correspondence with the configured resources. For example, from the first beam of beam sweeping, the beam sweeping directions may be in a one-to-one correspondence with the configured resources. Alternatively, from the $n^{th}$ ($n \geq 2$) beam of beam sweeping, the beam sweeping directions may be in a one-to-one correspondence with the configured resources. In this way, the resource for transmitting/receiving the first pilot signal may be subsequently determined (for example, a direction of transmitting/receiving the first pilot signal is determined; or a time domain location of determining/receiving the first pilot signal is determined) based on the one-to-one correspondence.

In some embodiments, a quantity of beam sweeping directions in the correspondence indicated by the first information may be greater than a quantity of resources configured for the terminal device by a network side. In other words, a quantity of resources configured for the terminal device by the network is smaller. In some embodiments, the resource configured for the terminal device by the network includes angle information. When the beam sweeping direction is the same as an angle of the resource configured for the terminal device by the network, a beam transmitting/receiving time may be determined based on a correspondence between a beam sweeping direction and a time domain location or based on a correspondence between a beam sweeping direction and a resource.

In some embodiments, when a quantity of beam sweeping directions is n, a quantity of resources configured for the terminal device by the network side is m. When n is an integer multiple of m, the $i^{th}$ ($i \leq m$) resource may correspond to the $(i*n/m)^{th}$ beam sweeping direction. For example, in a general case, the $i^{th}$ resource may correspond to the $(i*floor(n/m))^{th}$ beam sweeping direction.

In some embodiments, the first information may be used to indicate one or more groups of correspondences. Each group in the one or more groups of correspondences is used to indicate the correspondence between the one or more beam sweeping directions and the one or more time domain locations. For example, each group in the one or more groups of correspondences may include the correspondence between the one or more beam sweeping directions and the one or more time domain locations, or each group in the one or more groups of correspondences may include the correspondence between the one or more beam sweeping directions and the one or more pilot resources.

In other words, the first information may be used to indicate one or more sets of correspondences, and each set of correspondences may be used to indicate the correspondence between the one or more beam sweeping directions and the one or more time domain locations. For example, each set of correspondences may include the correspondence between the one or more beam sweeping directions and the one or more time domain locations, or each set of correspondences may include the correspondence between the one or more beam sweeping directions and the one or more pilot resources.

In an implementation, the first information may be used to indicate a group of correspondences. In this case, a group of terminal devices may determine, by using the same group of correspondences, a resource for transmitting/receiving a pilot signal (for example, determine a direction of transmitting/receiving a pilot signal, or determine a time domain location of transmitting/receiving a pilot signal). In an example, a group of terminal devices may sequentially transmit pilot signals by using the same/fixed beam sweeping direction.

Embodiments of the present application impose no specific limitation on a definition and a division manner of a group of terminal devices. The group of terminal devices is used to indicate one or more terminal devices. The one or more terminal devices may be, for example, terminal devices in the same cell, or may be terminal devices in different cells. For example, the group of terminal devices forms a first terminal device group. Terminal devices in the first terminal device group may be located in the same cell or may be located in different cells.

In some embodiments, the group of terminal devices may mean one or more terminal devices located in the same valid area. In the valid area, when the terminal device moves, a pilot signal (such as an SRS or a PRS) of the terminal device remains unchanged. In some embodiments, the valid area may be located in one cell. In some embodiments, the valid area may extend across a plurality of cells.

In other words, in a case that the first information is used to indicate a group of correspondences, a group of terminal devices (for example, all terminal devices in the first terminal device group) may determine, by using the same group of correspondences, a resource for transmitting/receiving a first pilot signal.

In an example, given that a pilot resource of the terminal device may need to be received by a plurality of base stations, for example, in an uplink positioning scenario, the pilot resource of the terminal device may need to be received by a plurality of base stations, the base station may thus need to configure a plurality of pilot resources for individual terminal devices. As a result, a large quantity of resources may be required to be occupied on a base station side. This is prone to resource waste. Therefore, in some embodiments, the base station may configure the same pilot resource for different terminal devices (for example, a group of terminal devices), to save resources. In this case, the base station may configure the same correspondence (for example, configure the same group of correspondences) for the group of terminal devices, so that the group of terminal devices determines, by using the same group of correspondences, a resource for transmitting/receiving a pilot signal.

However, with reference to FIG. 5, if pilot resources configured for the group of terminal devices are the same and a pilot signal is transmitted/received by using the same group of correspondences, a resource collision problem may occur if beam sweeping directions of some terminal devices in the group of terminal devices are the same and locations of the terminal devices are relatively close.

For this problem, an embodiment of the present application proposes that the first information may be used to indicate a plurality of groups of correspondences in another implementation. In this case, the group of terminal devices may determine, by using different correspondences, a resource for transmitting/receiving a pilot signal (for example, determine a direction of transmitting/receiving a pilot signal or determine a time domain location of transmitting/receiving a pilot signal).

In other words, in a case that the first information is used to indicate a plurality of groups of correspondences, some or all of terminal devices in the group of terminal devices (for example, the first terminal device group) may determine, by using different groups of correspondences, the resource for transmitting/receiving the first pilot signal. For example, the group of terminal devices includes a first terminal device, a second terminal device, and a third terminal device. The first information is used to indicate two groups of correspondences. The first terminal device and the second terminal device may determine, by using a first group of correspondences, the resource for transmitting/receiving the first pilot signal, and the third terminal device may determine, by using a second group of correspondences, the resource for transmitting/receiving the first pilot signal. Alternatively, the group of terminal devices includes a first terminal device, a second terminal device, and a third terminal device. The first information is used to indicate three groups of correspondences. The first terminal device may determine, by using a first group of correspondences, the resource for transmitting/receiving the first pilot signal; the second terminal device may determine, by using a second group of correspondences, the resource for transmitting/receiving the first pilot signal; the third terminal device may determine, by using a third group of correspondences, the resource for transmitting/receiving the first pilot signal; and the like.

In an example, the base station may configure the same pilot resource for different terminal devices (for example, for a group of terminal devices), to save resources. In this case, the base station may configure different correspondences for the group of terminal devices, to avoid a resource collision. In other words, when the group of terminal devices supports a plurality of groups of correspondences, terminal devices in the group of terminal devices may transmit/receive pilot signals in different beam sweeping directions, thereby avoiding a resource collision in time-frequency-space dimensions. In some cases, this may encounter a location collision of terminal devices. However, the possibility for the location collision is very small and it may not occur in all beam sweeping directions.

In some embodiments, when the first information is used to indicate a plurality of groups of correspondences, the plurality of groups of correspondences may be used for different terminal device groups, and terminal devices in the same terminal device group may use the same group of correspondences. For example, the first information is used to indicate three groups of correspondences. A first group of correspondences may be applied to a first terminal device group, and all terminal devices in the first terminal device group may determine, by using the first group of correspondences, a resource for transmitting/receiving a pilot signal. A second group of correspondences may be applied to a second terminal device group, and all terminal devices in the second terminal device group may determine, by using the second group of correspondences, a resource for transmitting/receiving a pilot signal. A third group of correspondences may be applied to a third terminal device group, and all terminal devices in the third terminal device group may determine, by using the third group of correspondences, a resource for transmitting/receiving a pilot signal. However, an embodiment of the present application is not limited thereto. For example, the first information is used to indicate three groups of correspondences. A first group of correspondences and a second group of correspondences may be applied to a first terminal device group. Some terminal devices in the first terminal device group may determine, by using the first group of correspondences, a resource for transmitting/receiving a pilot signal, and some terminal devices may determine, by using the second group of correspondences, a resource for transmitting/receiving a pilot signal. The first group of correspondences, the second group of correspondences, and a third group of correspondences may be applied to a second terminal device group. Some terminal devices in the second terminal device group may determine, by using the first group of correspondences, a resource for transmitting/receiving a pilot signal; some terminal devices may determine, by using the second group of correspondences, a resource for transmitting/receiving a pilot signal; and some terminal devices may determine, by using the third group of correspondences, a resource for transmitting/receiving a pilot signal.

In some embodiments, in a case that the first information is used to indicate a plurality of groups of correspondences, the first information may further include a group sequence number of each group of correspondences in the plurality of groups of correspondences, to distinguish between different groups of correspondences. In some embodiments, a group sequence number of each group of correspondences can uniquely identify the group of correspondences.

In some embodiments, when the first information is used to indicate a plurality of groups of correspondences, the base station may further notify the terminal device of a group of correspondences corresponding to the terminal device. In an implementation, the base station may notify the terminal device of a group sequence number of a group of correspondences corresponding to the terminal device.

Alternatively, in some embodiments, the method provided in an embodiment of the present application may further include the following step: The terminal device receives first signalling, where the first signalling is used to indicate a group sequence number of a group of correspondences used by the terminal device.

In some embodiments, the first signalling is transmitted by the base station to the terminal device.

Embodiments of the present application impose no specific limitation on the first signalling. For example, the first signalling may be dedicated signalling. For another example, the first signalling may be higher layer signalling (such as RRC signalling), medium access control control element (medium access control control element, MAC CE) signalling, downlink control information (downlink control information, DCI), or the like.

As mentioned above, in a case that the first information is used to indicate a group of correspondences, all terminal devices in a group of terminal devices may determine, by using the same group of correspondences, a resource for transmitting/receiving a pilot signal. However, an embodiment of the present application is not limited thereto. In some embodiments, in a case that the first information is used to indicate a plurality of groups of correspondences, all terminal devices in a group of terminal devices may also determine, by using the same group of correspondences, a resource for transmitting/receiving a pilot signal.

In some embodiments, for example, in a positioning scenario, both a serving cell and a neighboring cell need to determine a resource for transmitting/receiving a pilot signal. Therefore, both the serving cell and the neighboring cell need to know the first information, to determine, based on the first information, the resource for transmitting/receiving a pilot signal. On this basis, in some embodiments, the base station needs to transmit the first information to a positioning device (such as an LMF) in a core network, so that the positioning device in the core network transmits the first information to the neighboring cell.

In some embodiments, the first information transmitted by the base station to the positioning device in the core network may include one or more of the following information: the correspondence between the one or more beam sweeping directions and the one or more time domain locations, the correspondence between the one or more beam sweeping directions and the one or more pilot resources, an identity of the terminal device, or the group sequence number of a group of correspondences corresponding to the terminal device.

In some embodiments, the positioning device in the core network may transmit the first information to the neighboring cell of the terminal device. The first information transmitted by the positioning device in the core network to the neighboring cell may include one or more of the following information: the correspondence between the one or more beam sweeping directions and the one or more time domain locations, the correspondence between the one or more beam sweeping directions and the one or more pilot resources, an identity of the terminal device, or the group sequence number of a group of correspondences corresponding to the terminal device.

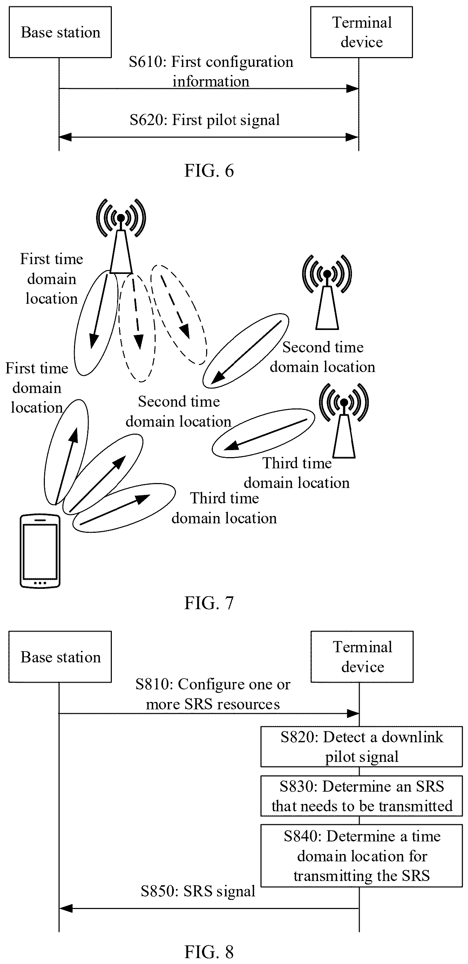

As mentioned above, in some embodiments, the base station may configure a pilot resource for the terminal device. The following describes this in detail with reference to FIG. 6.

FIG. 6 is a schematic flowchart of a wireless communication method according to another embodiment of the present application. The method shown in FIG. 6 may include step S610 and step S620.

In step S610, a terminal device receives first configuration information. The first configuration information may be used to configure one or more of the following: one or more pilot resources, information about a quantity of actually transmitted pilot beams, or information about a quantity of pilot resources.

For example, the first configuration information may be used to configure the one or more pilot resources (resources). In other words, the first configuration information may be used to configure a resource set, and the resource set may include one or more pilot resources. In other words, the first configuration information may be used to configure one or more resource sets, and each resource set in the one or more resource sets may include one or more pilot resources.

For another example, the first configuration information may be used to configure one or more pilot resources and information about a quantity of actually transmitted pilot beams. In an example, the first configuration information may be used to configure five pilot resources, and indicate that a quantity of actually transmitted pilot beams is three. In other words, the terminal device may subsequently actually transmit a pilot beam (such as a first pilot signal) by using a part of resources in the pilot resources configured by using the first configuration information.

For still another example, the first configuration information may be used to configure one or more pilot resources, information about a quantity of actually transmitted pilot beams, and information about a quantity of pilot resources.

In some embodiments, the information about the quantity of pilot resources may indicate a quantity of pilot resources configured for the terminal device by a network side. In some embodiments, the information about the quantity of pilot resources may indicate information about a quantity of pilot resources that are needed for the terminal device to actually transmit a pilot signal.

In some embodiments, the first pilot signal is determined based on the first information and the first configuration information. For example, the first pilot signal is determined based on the first information and the pilot resource configured by using the first configuration information. Alternatively, the first pilot signal is determined based on the first information, the pilot resource configured by using the first configuration information, and the information, configured by using the first configuration information, about the quantity of actually transmitted pilot beams. Alternatively, the first pilot signal is determined based on the first information, the pilot resource configured by using the first configuration information, the information, configured by using the first configuration information, about the quantity of actually transmitted pilot beams, and the information, configured by using the first configuration information, about the quantity of pilot resources.

In some embodiments, when a quantity, indicated in the first information, of one or more beam sweeping directions is n, and a quantity of pilot resources configured by using the first configuration information is m, a sequence number j of a beam sweeping direction corresponding to the $i^{th}$ pilot resource in the pilot resources configured by using the first configuration information satisfies:

$$j = i * \mathrm{floor}(n/m),$$

where m and n are positive integers, i is a positive integer less than or equal to m, and floor represents a floor operation.

Certainly, an embodiment of the present application is not limited thereto. For example, when a quantity, indicated in the first information, of one or more beam sweeping directions is n, and a quantity of pilot resources configured by using the first configuration information is m, a sequence number j of a beam sweeping direction corresponding to the $i^{th}$ pilot resource in the pilot resources configured by using the first configuration information satisfies:

$$j = i * ceiling(n/m),$$

where m and n are positive integers, i is a positive integer less than or equal to m, and ceiling represents a ceiling operation.

In some embodiments, the first configuration information may be transmitted by a base station. In other words, the base station may configure one or more pilot resources for the terminal device.

In some embodiments, the first configuration information may be transmitted by a positioning device (such as an LMF) in a core network. In other words, the positioning device in the core network may configure one or more pilot resources for the terminal device.

In some embodiments, one or more pilot resources configured by using the first configuration information correspond to (or are associated with) one or more beam sweeping directions. In other words, one or more pilot resources configured by using the first configuration information may be resources in different beam sweeping directions, that is, one or more pilot resources configured by using the first configuration information may be used to transmit/receive pilot signals in different beam sweeping directions.

In an embodiment of the present application, the base station or the positioning device in the core network may configure resources in different beam sweeping directions for the terminal device, so that the terminal device subsequently selects, based on a determined beam sweeping direction, an appropriate resource to transmit/receive a pilot signal.

In some embodiments, that one or more pilot resources configured by using the first configuration information correspond to one or more beam sweeping directions may indicate that one or more pilot resources configured by using the first configuration information are in one-to-one correspondence with one or more beam sweeping directions.

In some embodiments, that one or more pilot resources configured by using the first configuration information correspond to the one or more beam sweeping directions may indicate that one or more pilot resources configured by using the first configuration information are in one-to-many or many-to-one correspondence with one or more beam sweeping directions.

In step S620, the terminal device transmits/receives the first pilot signal. A resource for transmitting/receiving the first pilot signal is determined based on the first information.

For detailed descriptions of step S620, refer to the foregoing related descriptions of step S310 and the first information. For brevity, details are not described herein again.

In some embodiments, one or more pilot resources may be randomly configured by the base station for the terminal device. This may lead to subsequent configuration vacancy of some resources, causing a waste of resources. The following provides an example with reference to FIG. 7. As shown in FIG. 7, a base station configures a plurality of resources for a terminal device. Subsequently, the terminal device may select a part of resources from the configured resources for transmitting a pilot signal. However, a quantity of pilot signals that actually need to be transmitted by the terminal device is less than a quantity of configured resources. Therefore, a resource that is not used for transmission is vacant, causing a waste of resources. A resource configured in a beam sweeping direction corresponding to a dashed box in FIG. 7 may be wasted.

On this basis, in some embodiments, one or more pilot resources configured by using the first configuration information may be configured based on one or more of the following information: statistical information for the terminal device or positioning information of the terminal device.

Content of the statistical information for the terminal device is not specifically limited in embodiments of the present application. For example, the content of the statistical information for the terminal device may include one or more of the following: statistical information of a beam sweeping width for the terminal device, or statistical information of a beam sweeping direction for the terminal device.

A source of the statistical information for the terminal device is not specifically limited in embodiments of the present application. For example, the statistical information for the terminal device may be provided by the positioning device (for example, the LMF) in the core network to the base station.

Content of the positioning information of the terminal device is not specifically limited in embodiments of the present application. For example, the positioning information may be approximate positioning information (coarse positioning information), and is used to indicate an approximate location of the terminal device.

A source of the positioning information of the terminal device is not specifically limited in embodiments of the present application. For example, the positioning information of the terminal device may be provided by the positioning device (for example, the LMF) in the core network to the base station. For example, for a positioning service or a positioning business insensitive to a delay, the positioning device in the core network may provide the coarse positioning information of the terminal device to the base station, so that the base station configures, based on the information, one or more pilot resources used to transmit/receive a pilot signal.

In some embodiments, when the terminal device is a low power UE, the base station may configure one or more pilot resources for the terminal device based on the foregoing configuration scheme. In this way, in a case that the terminal device does not access a cell, the terminal device may also not transmit/receive a pilot signal in a beam sweeping manner, which can save time-frequency resources and reduce power consumption of the terminal device.

In some embodiments, in a positioning scenario, a serving cell and a neighboring cell may perform a plurality of times of positioning detection (in other words, update a location of the terminal device) based on one or more pilot resources configured for the terminal device. The one or more configured pilot resources are determined based on the positioning information (the location) of the terminal device.

In some embodiments, after the base station configures one or more pilot resources based on the positioning information of the terminal device, the terminal device may sequentially transmit/receive a pilot signal by using one or more configured pilot resources. For example, after the terminal device transmits the pilot signal once by using one resource in one or more configured pilot resources, the terminal device may transmit the pilot signal for the second time after a specific time by using another resource in one or more configured pilot resources. In some embodiments, when the terminal device enters a connected state, the terminal device may sequentially transmit/receive a pilot signal by using one or more configured pilot resources. For example, after the pilot signal may be transmitted once by using one resource in one or more configured pilot resources, after a specific time, the terminal device enters the connected state and transmits the pilot signal for the second time by using another resource in one or more configured pilot resources. The pilot signal transmitted for the second time has a pilot signal configuration that is determined by the positioning device (for example, the LMF) in the core network based on a result of positioning performed based on the first pilot signal. This pilot signal has more accurate directivity.

In some embodiments, before transmitting/receiving the pilot signal (for example, the first pilot signal), the terminal device may determine, based on a direction of the downlink pilot signal detected by the terminal device, a direction of transmitting/receiving the pilot signal that needs to be transmitted/received. This is because if the terminal device can detect the downlink pilot signal in a specific direction, it indicates that the upstream base station transmits and receives signals in corresponding directions, and the terminal device receives the signal transmitted by the base station. Therefore, the terminal device can further transmit/receive a signal in a corresponding direction.

In an implementation, the terminal device may detect a downlink pilot signal, for example, detect downlink pilot signals of all possible sequences, possible times, and possible directions, and then determine, based on a detection result, a direction of transmitting a pilot signal that needs to be transmitted, or determine, based on a detection result, a direction of receiving a pilot signal that needs to be received.

Embodiments of the present application impose no limitation on a type of a downlink pilot signal detected by the terminal device. For example, the downlink pilot signal may be one or more of the following signals: an SSB, a CSI-RS, or a CRS. When the downlink pilot signal is an SSB, the downlink pilot signal may be a primary synchronization signal (primary synchronization signal, PSS), a secondary synchronization signal (secondary synchronization signal, SSS), or the like.

In some embodiments, that the terminal device detects the downlink pilot signal may mean that the terminal device detects a direction of receiving the downlink pilot signal. For example, the terminal device may obtain, by using a method such as receive beam sweeping or direction estimation, the direction of receiving the downlink pilot signal.

In some embodiments, a beam width of the resource for transmitting/receiving the first pilot signal is adjustable. In an implementation, the base station may notify (for example, by using a broadcast notification or a higher layer signalling notification) the terminal device, so that the beam width of the resource of the first pilot signal is adjustable. In another implementation, it may be predefined in a protocol that the beam width of the resource for the first pilot signal is adjustable.

In some embodiments, if the beam width of the resource for transmitting/receiving the first pilot signal is adjustable, the base station may further notify the terminal device of the beam width of the resource for the first pilot signal. For example, the base station may notify the terminal device of the beam width of the resource for the first pilot signal in a plurality of manners, such as broadcast signalling, higher layer signalling, and lower layer signalling.

In some embodiments, after transmit/receive beams between the terminal device and the base station are aligned, in a case of a direct wave, the terminal device and the base station may detect signals between the terminal device and the base station.

In some embodiments, after transmit/receive beams between the terminal device and the base station are aligned, in a case of a non-direct wave, signal transmission/reception quality between the terminal device and the base station may be poor because an angle of an angle of arrival of the non-direct wave relative to an angle of arrival of a direct wave may be extended within a specific range. For this reason, in some embodiments, in the case of the non-direct wave, a signal receiver (such as the base station) may perform one or more of the following processing to improve signal transmission/reception quality.

Processing 1: The signal receiver may perform beam sweeping within a specific range of an angle of arrival based on an arrival instant of the direct wave. In this case, in this embodiment of the present application, only a small range of beam sweeping needs to be performed to accurately determine a receive beam.

Processing 2: The signal receiver may increase an angle of a receive beam, so that the receive beam covers the non-direct wave.

Processing 3: The signal receiver may increase an angle of a receive beam, so that the receive beam covers the non-direct wave. The signal receiver further reduces the beam width in the swept beam, to perform beam sweeping. A receive beam determined in the manner of the processing 3 is more accurate than that determined in the manner of the processing 2.

Based on the foregoing description, for ease of understanding, the following exemplarily describes an overall procedure of the method in embodiments of the present application with reference to FIG. 8. In an example of FIG. 8, description is provided by using an example in which a first pilot signal is an SRS. The method shown in FIG. 8 may include step S810 to step S850.

In step S810, a terminal device receives one or more SRS resources configured by a network side. In other words, the terminal device receives an SRS resource set configured by the network side.

In some embodiments, one or more SRS resources are configured by a base station. In some embodiments, one or more SRS resources are configured by a positioning device in a core network.

In some embodiments, at least one of a beam sweeping direction corresponding to each SRS resource in one or more SRS resources or a correspondence between a beam sweeping direction corresponding to each resource and a time domain location may be indicated to the terminal device by using first information. For example, this may be indicated to the terminal device by the base station through the use of broadcast signalling and RRC signalling; or may be indicated to the terminal device in a predefined manner in a protocol.

In step S820, the terminal device detects a downlink pilot signal. For example, the terminal device detects an SSB, a CSI-RS, a CRS, or the like.

In some embodiments, the terminal device may detect downlink pilot signals of all possible sequences, possible times, and possible directions.

In some embodiments, the terminal device detects the downlink pilot signal in order to determine a receiving direction of the signal, for example, determine a receiving direction of the SSB, or determine a receiving direction of the CSI-RS. In this way, the terminal device may determine a specific direction in which the base station transmits and receives a signal.

In step S830, the terminal device determines, based on a detection result, an SRS that needs to be transmitted.

For example, the terminal device determines, based on the detection result, a specific beam sweeping direction in which the SRS may be transmitted.

In some embodiments, a quantity of SRS resources that are needed by the terminal device to actually transmit the SRS may be less than a quantity of configured SRS resources.

In step S840, for each SRS that is to be transmitted, the terminal device determines, based on a direction of the detected downlink pilot signal and first information, a time domain location for transmitting the SRS.

For example, if the terminal device determines, based on the direction of the detected downlink pilot signal, that the SRS needs to be transmitted in a 30° direction, the terminal device may determine, based on a correspondence between a beam sweeping direction and a time domain location, as indicated by the first information, a specific time domain location at which the SRS in the 30° direction is transmitted.

In step S850, the terminal device transmits the SRS.

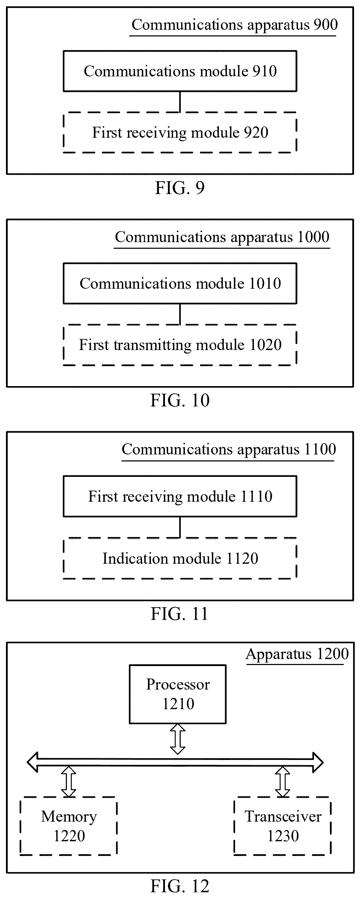

The foregoing describes in detail the method embodiments of the present application with reference to FIG. 1 to FIG. 8. The following describes in detail apparatus embodiments of the present application with reference to FIG. 9 to FIG. 12. It should be understood that the description of the method embodiments corresponds to the description of the apparatus embodiments, and therefore, for parts that are not described in detail, reference may be made to the foregoing method embodiments.

FIG. 9 is a schematic diagram of a structure of a communications apparatus according to an embodiment of the present application. The communications apparatus 900 shown in FIG. 9 may be any one of the terminal devices described above. The communications apparatus 900 may include a communications module 910.

The communications module 910 may be configured to transmit/receive a first pilot signal, where a resource for transmitting/receiving the first pilot signal is determined based on first information, and the first information is used to indicate a correspondence between one or more beam sweeping directions and one or more time domain locations.

Optionally, the first information includes first indication information, the first indication information is used to indicate whether the correspondence for a neighboring cell is based on the same reference information as that for a serving cell, and the first information is determined based on the reference information according to a rule specified in a protocol.

Optionally, the first information is determined by the terminal device by using the reference information according to the rule specified in the protocol.

Optionally, the first information includes one or more of the following: the correspondence between the one or more beam sweeping directions and the one or more time domain locations; or a correspondence between the one or more beam sweeping directions and one or more pilot resources.

Optionally, the one or more beam sweeping directions are one or more beam transmission directions.

Optionally, the first information is used to indicate one or more groups of correspondences, and each group in the one or more groups of correspondences is used to indicate the correspondence between the one or more beam sweeping directions and the one or more time domain locations.

Optionally, the terminal device belongs to a first terminal device group, and all terminal devices in the first terminal device group determine, by using the same group of correspondences, a resource for transmitting/receiving the first pilot signal.

Optionally, the terminal device belongs to a first terminal device group, and all or a part of terminal devices in the first terminal device group determine, by using different groups of correspondences, a resource for transmitting/receiving the first pilot signal.

Optionally, the first information is used to indicate a plurality of groups of correspondences, and the first information further includes a group sequence number of each group in the plurality of groups of correspondences.

Optionally, the first information is configured by a base station, or the first information is predefined in a protocol.

Optionally, the communications apparatus 900 further includes: a first receiving module 920, receiving first configuration information, where the first configuration information is used to configure one or more of the following: one or more pilot resources, information about a quantity of actually transmitted pilot beams, or information about a quantity of pilot resources, and the first pilot signal is determined based on the first information and the first configuration information.

Optionally, the one or more pilot resources configured by using the first configuration information correspond to the one or more beam sweeping directions.

Optionally, when a quantity of the one or more beam sweeping directions is n, and the quantity of pilot resources configured by using the first configuration information is m, a sequence number j of a beam sweeping direction corresponding to the $i^{th}$ pilot resource in the pilot resources configured by using the first configuration information satisfies: $j = i*floor(n/m)$, where m and n are positive integers, i is a positive integer less than or equal to m, and floor represents a floor operation.

Optionally, a direction of transmitting/receiving the first pilot signal is determined based on a direction of a downlink pilot signal detected by the terminal device.

Optionally, the first pilot signal includes one or more of the following signals: a sounding reference signal SRS, an SRS used for positioning, a positioning reference signal PRS, a channel state information reference signal CSI-RS, a tracking reference signal TRS, a demodulation reference signal DMRS, a synchronization signal block SSB, a physical broadcast channel PBCH, a primary synchronization signal PSS, or a secondary synchronization signal SSS.

Optionally, the communications module 910 may be a transceiver 1230. The communications apparatus 900 may further include a processor 1210 and a memory 1220, which are specifically shown in FIG. 12.

FIG. 10 is a schematic diagram of a structure of a communications apparatus according to another embodiment of the present application. The communications apparatus 1000 shown in FIG. 10 may be any base station described above. The communications apparatus 1000 may include a communications module 1010.

The communications module 1010 may be configured to: receive a first pilot signal transmitted by a terminal device, or transmit a first pilot signal to a terminal device, where a resource for receiving/transmitting the first pilot signal is determined based on first information, and the first information is used to indicate a correspondence between one or more beam sweeping directions and one or more time domain locations.

Optionally, the first information includes first indication information, the first indication information is used to indicate whether the correspondence for a neighboring cell is based on the same reference information as that for a serving cell, and the first information is determined based on the reference information according to a rule specified in a protocol.

Optionally, the first information is determined by the base station by using the reference information according to the rule specified in the protocol.

Optionally, the first information includes one or more of the following: the correspondence between the one or more beam sweeping directions and the one or more time domain locations; or a correspondence between the one or more beam sweeping directions and one or more pilot resources.

Optionally, the one or more beam sweeping directions are one or more beam transmission directions.

Optionally, the first information is used to indicate one or more groups of correspondences, and each group in the one or more groups of correspondences is used to indicate the correspondence between one or more beam sweeping directions and one or more time domain locations.

Optionally, the terminal device belongs to a first terminal device group, and all terminal devices in the first terminal device group determine, by using the same group of correspondences, a resource for transmitting/receiving the first pilot signal.

Optionally, the terminal device belongs to a first terminal device group, and all or a part of terminal devices in the first terminal device group determine, by using different groups of correspondences, a resource for transmitting/receiving the first pilot signal.

Optionally, the first information is used to indicate a plurality of groups of correspondences, and the first information further includes a group sequence number of each group in the plurality of groups of correspondences.

Optionally, the first information is configured by the base station, or the first information is predefined in a protocol.

Optionally, the communications apparatus 1000 further includes: a first transmitting module 1020, transmitting first configuration information to the terminal device, where the first configuration information is used to configure one or more of the following: one or more pilot resources, information about a quantity of actually transmitted pilot beams, or information about a quantity of pilot resources, and the first pilot signal is determined based on the first information and the first configuration information.

Optionally, the one or more pilot resources configured by using the first configuration information correspond to the one or more beam sweeping directions.

Optionally, when a quantity of the one or more beam sweeping directions is n, and the quantity of pilot resources configured by using the first configuration information is m, a sequence number j of a beam sweeping direction corresponding to the $i^{th}$ pilot resource in the pilot resources configured by using the first configuration information satisfies: $j = i*floor(n/m)$, where m and n are positive integers, i is a positive integer less than or equal to m, and floor represents a floor operation.

Optionally, the communications apparatus 1000 further includes: a second transmitting module, transmitting the first information to a positioning device in a core network.

Optionally, the communications apparatus 1000 further includes: a receiving module, receiving the reference information of the first information indicated by the positioning device in the core network and/or an access and mobility management function AMF, where the first information is determined by the base station by using the reference information according to the rule specified in the protocol.

Optionally, the communications apparatus 1000 further includes: a third transmitting module, transmitting a response to the positioning device in the core network and/or the AMF, where the response is used to indicate that the base station configures the first information with reference to the reference information.

Optionally, the first pilot signal includes one or more of the following signals: a sounding reference signal SRS, an SRS used for positioning, a positioning reference signal PRS, a channel state information reference signal CSI-RS, a tracking reference signal TRS, a demodulation reference signal DMRS, a synchronization signal block SSB, a physical broadcast channel PBCH, a primary synchronization signal PSS, or a secondary synchronization signal SSS.

Optionally, the communications module 1010 may be a transceiver 1230. The communications apparatus 1000 may further include a processor 1210 and a memory 1220, which are specifically shown in FIG. 12.

FIG. 11 is a schematic diagram of a structure of a communications apparatus according to still another embodiment of the present application. A communications apparatus 1100 shown in FIG. 11 may be any of the positioning devices in the core networks described above. The communications apparatus 1100 may include a first receiving module 1110.

The first receiving module 1110 may be configured to receive first information, where the first information is used to indicate a correspondence between one or more beam sweeping directions and one or more time domain locations.

Optionally, the first information includes first indication information, the first indication information is used to indicate whether the correspondence for a neighboring cell is based on the same reference information as that for a serving cell, and the first information is determined based on the reference information according to a rule specified in a protocol.

Optionally, the first information includes one or more of the following: the correspondence between the one or more beam sweeping directions and the one or more time domain locations; or a correspondence between the one or more beam sweeping directions and one or more pilot resources.

Optionally, the one or more beam sweeping directions are one or more beam transmission directions.

Optionally, the first information is used to indicate one or more groups of correspondences, and each group in the one or more groups of correspondences is used to indicate the correspondence between the one or more beam sweeping directions and the one or more time domain locations.

Optionally, the first information is used to indicate a plurality of groups of correspondences, and the first information further includes a group sequence number of each group in the plurality of groups of correspondences.

Optionally, the first information is configured by a base station, or the first information is predefined in a protocol.

Optionally, the communications apparatus 1100 further includes: an indication module 1120, indicating reference information of the first information to the base station, where the first information is determined by the base station by using the reference information according to a rule specified in a protocol.

Optionally, the communications apparatus 1100 further includes: a second receiving module, receiving a response transmitted by the base station, where the response is used to indicate that the base station configures the first information with reference to the reference information.

Optionally, the first pilot signal includes one or more of the following signals: a sounding reference signal SRS, an SRS used for positioning, a positioning reference signal PRS, a channel state information reference signal CSI-RS, a tracking reference signal TRS, a demodulation reference signal DMRS, a synchronization signal block SSB, a physical broadcast channel PBCH, a primary synchronization signal PSS, or a secondary synchronization signal SSS.

Optionally, the first receiving module 1110 may be a transceiver 1230. The communications apparatus 1100 may further include a processor 1210 and a memory 1220, which are specifically shown in FIG. 12.

FIG. 12 is a schematic diagram of a structure of a communications apparatus according to an embodiment of the present application. Dashed lines in FIG. 12 indicate that the unit or module is optional. The apparatus 1200 may be configured to implement the methods described in the foregoing method embodiments. The apparatus 1200 may be a chip, a terminal device, or a base station.

The apparatus 1200 may include one or more processors 1210. The processor 1210 may support the apparatus 1200 in implementing the methods described in the foregoing method embodiments. The processor 1210 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field-programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

The apparatus 1200 may further include one or more memories 1220. The memory 1220 stores a program thereon, and the program may be executed by the processor 1210, so that the processor 1210 executes the methods described in the foregoing method embodiments. The memory 1220 may be separate from the processor 1210 or may be integrated into the processor 1210.

The apparatus 1200 may further include a transceiver 1230. The processor 1210 may communicate with another device or chip through the transceiver 1230. For example, the processor 1210 may transmit data to and receive data from another device or chip through the transceiver 1230.

An embodiment of the present application further provides a computer-readable storage medium for storing a program. The computer-readable storage medium may be applied to the terminal device or the base station provided in embodiments of the present application, and the program causes a computer to execute the methods performed by the terminal device or the base station in various embodiments of the present application.

An embodiment of the present application further provides a computer program product. The computer program product includes a program. The computer program product may be applied to the terminal or the base station provided in embodiments of the present application, and the program causes a computer to execute the methods that are executed by the terminal device or the base station in various embodiments of the present application.

An embodiment of the present application further provides a computer program. The computer program may be applied to the terminal device or the base station provided in embodiments of the present application, and the computer program causes a computer to execute the methods that are executed by the terminal device or the base station in various embodiments of the present application.

It should be understood that the terms "system" and "network" in the present application may be used interchangeably. In addition, the terms used in the present application are only used to explain the specific embodiments of the present application, and are not intended to limit the present application. The terms "first", "second", "third", "fourth", and the like in the specification, claims, and drawings of the present application are used to distinguish between different objects, rather than to describe a specific order. In addition, the terms "include" and "have" and any variations thereof are intended to cover a non-exclusive inclusion.

In embodiments of the present application, "indicate" mentioned herein may refer to a direct indication, or may refer to an indirect indication, or may mean that there is an association relationship. For example, A indicates B, which may mean that A directly indicates B, for example, B may be obtained based on A; or may mean that A indirectly indicates B, for example, A indicates C, and B may be obtained based on C; or may mean that there is an association relationship between A and B.

In embodiments of the present application, "B corresponding to A" means that B is associated with A, and B may be determined based on A. However, it should be further understood that, determining B based on A does not mean determining B based only on A, but instead, B may be determined based on A and/or other information.

In embodiments of the present application, the term "correspond" may mean that there is a direct or indirect correspondence between the two, or may mean that there is an association relationship between the two, or may mean that there is a relationship such as indicating and being indicated, or configuring and being configured.

In embodiments of the present application, "include" mentioned may refer to direct inclusion, or may refer to indirect inclusion. Optionally, the term "include" mentioned in embodiments of the present application may be replaced with "indicate" or "be used to". For example, A including B may be replaced with that A indicates B, or A is used to determine B.

In embodiments of the present application, "predefinition" or "preconfiguration" may be implemented by prestoring corresponding code or a corresponding table in a device (for example, including a terminal device and a base station) or in other manners that may be used for indicating related information. A specific implementation thereof is not limited in the present application. For example, predefinition may refer to being defined in a protocol.

In embodiments of the present application, the "protocol" may refer to a standard protocol in the communications field, and may include, for example, an LTE protocol, an NR protocol, and a related protocol applied to a future communications system, which is not limited in the present application.

In embodiments of the present application, the term "and/or" is merely an association relationship that describes associated objects, and represents that there may be three relationships. For example, A and/or B may represent three cases: only A exists, both A and B exist, and only B exists. In addition, the character "/" in the specification generally indicates an "or" relationship between the associated objects.

In embodiments of the present application, sequence numbers of the foregoing processes do not mean execution sequences. The execution sequences of the processes should be determined according to functions and internal logic of the processes, and should not be construed as any limitation on the implementation processes of embodiments of the present application.

In the several embodiments provided in the present application, it should be understood that the disclosed system, apparatus, and method may be implemented in other manners. For example, the foregoing apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interface, apparatuses or units, and may be implemented in electrical, mechanical, or other forms.

The units described as separate parts may or may not be physically separate, and parts displayed as units may or may not be physical units, and may be located at one position, or may be distributed on a plurality of network elements. Some or all of the units may be selected according to actual requirements to achieve the objectives of the solutions of embodiments.

In addition, functional units in embodiments of the present application may be integrated into one processing unit, each of the units may exist alone physically, or two or more units are integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions in embodiments of the present application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (such as a coaxial cable, an optical fiber, and a digital subscriber line (digital subscriber line, DSL)) manner or a wireless (such as infrared, radio, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state drive (solid state drive, SSD)), or the like.

The foregoing descriptions are merely specific implementations of the present application, but the protection scope of the present application is not limited thereto. Any variation or replacement readily figured out by a person skilled in the art within the technical scope disclosed in the present application shall fall within the protection scope of the present application. Therefore, the protection scope of the present application shall be subject to the protection scope of the claims.

## Claims

1. A wireless communication method, comprising: transmitting/receiving, by a terminal device, a first pilot signal, wherein a resource for transmitting/receiving the first pilot signal is determined based on first information, and the first information is used to indicate a correspondence between one or more beam sweeping directions and one or more time domain locations.

2. The method according to claim 1, wherein the first information comprises first indication information, the first indication information is used to indicate whether the correspondence for a neighboring cell is based on the same reference information as that for a serving cell, and the first information is determined based on the reference information according to a rule specified in a protocol.

3. The method according to claim 2, wherein the first information is determined by the terminal device by using the reference information according to the rule specified in the protocol.

4. The method according to any one of claims 1 to 3, wherein the first information comprises one or more of following:

the correspondence between the one or more beam sweeping directions and the one or more time domain locations; or
a correspondence between the one or more beam sweeping directions and one or more pilot resources.

5. The method according to any one of claims 1 to 4, wherein the one or more beam sweeping directions are one or more beam transmission directions.

6. The method according to any one of claims 1 to 5, wherein the first information is used to indicate one or more groups of correspondences, and each group in the one or more groups of correspondences is used to indicate the correspondence between the one or more beam sweeping directions and the one or more time domain locations.

7. The method according to claim 6, wherein the terminal device belongs to a first terminal device group, and all terminal devices in the first terminal device group determine, by using the same group of correspondences, a resource for transmitting/receiving the first pilot signal.

8. The method according to claim 6, wherein the terminal device belongs to a first terminal device group, and all or a part of terminal devices in the first terminal device group determine, by using different groups of correspondences, a resource for transmitting/receiving the first pilot signal.

9. The method according to any one of claims 6 to 8, wherein the first information is used to indicate a plurality of groups of correspondences, and the first information further comprises a group sequence number of each group in the plurality of groups of correspondences.

10. The method according to any one of claims 1 to 9, wherein the first information is configured by a base station, or the first information is predefined in a protocol.

11. The method according to any one of claims 1 to 10, wherein the method further comprises:

receiving, by the terminal device, first configuration information, wherein the first configuration information is used to configure one or more of following: one or more pilot resources, information about a quantity of actually transmitted pilot beams, or information about a quantity of pilot resources, and
wherein the first pilot signal is determined based on the first information and the first configuration information.

12. The method according to claim 11, wherein the one or more pilot resources configured by using the first configuration information correspond to the one or more beam sweeping directions.

13. The method according to claim 11 or 12, wherein when a quantity of the one or more beam sweeping directions is n, and the quantity of pilot resources configured by using the first configuration information is m, a sequence number j of a beam sweeping direction corresponding to the $i^{th}$ pilot resource in the pilot resources configured by using the first configuration information satisfies:

$$j = i*\mathrm{floor}(n/m),$$

wherein m and n are positive integers, i is a positive integer less than or equal to m, and floor represents a floor operation.

14. The method according to any one of claims 1 to 13, wherein a direction of transmitting/receiving the first pilot signal is determined based on a direction of a downlink pilot signal detected by the terminal device.

15. The method according to any one of claims 1 to 14, wherein the first pilot signal comprises one or more of following signals: a sounding reference signal SRS, an SRS used for positioning, a positioning reference signal PRS, a channel state information reference signal CSI-RS, a tracking reference signal TRS, a demodulation reference signal DMRS, a synchronization signal block SSB, a physical broadcast channel PBCH, a primary synchronization signal PSS, or a secondary synchronization signal SSS.

16. A wireless communication method, comprising:
receiving, by a base station, a first pilot signal transmitted by a terminal device, or transmitting a first pilot signal to a terminal device, wherein a resource for receiving/transmitting the first pilot signal is determined based on first information, and the first information is used to indicate a correspondence between one or more beam sweeping directions and one or more time domain locations.

17. The method according to claim 16, wherein the first information comprises first indication information, the first indication information is used to indicate whether the correspondence for a neighboring cell is based on the same reference information as that for a serving cell, and the first information is determined based on the reference information according to a rule specified in a protocol.

18. The method according to claim 17, wherein the first information is determined by the base station by using the reference information according to the rule specified in the protocol.

19. The method according to any one of claims 16 to 18, wherein the first information comprises one or more of following:

the correspondence between the one or more beam sweeping directions and the one or more time domain locations; or
a correspondence between the one or more beam sweeping directions and one or more pilot resources.

20. The method according to any one of claims 16 to 19, wherein the one or more beam sweeping directions are one or more beam transmission directions.

21. The method according to any one of claims 16 to 20, wherein the first information is used to indicate one or more groups of correspondences, and each group in the one or more groups of correspondences is used to indicate the correspondence between the one or more beam sweeping directions and the one or more time domain locations.

22. The method according to claim 21, wherein the terminal device belongs to a first terminal device group, and all terminal devices in the first terminal device group determine, by using the same group of correspondences, a resource for transmitting/receiving the first pilot signal.

23. The method according to claim 21, wherein the terminal device belongs to a first terminal device group, and all or a part of terminal devices in the first terminal device group determine, by using different groups of correspondences, a resource for transmitting/receiving the first pilot signal.

24. The method according to any one of claims 21 to 23, wherein the first information is used to indicate a plurality of groups of correspondences, and the first information further comprises a group sequence number of each group in the plurality of groups of correspondences.

25. The method according to any one of claims 16 to 24, wherein the first information is configured by the base station, or the first information is predefined in a protocol.

26. The method according to any one of claims 16 to 25, wherein the method further comprises:

transmitting, by the base station, first configuration information to the terminal device, wherein the first configuration information is used to configure one or more of following: one or more pilot resources, information about a quantity of actually transmitted pilot beams, or information about a quantity of pilot resources, and
wherein the first pilot signal is determined based on the first information and the first configuration information.

27. The method according to claim 26, wherein the one or more pilot resources configured by using the first configuration information correspond to the one or more beam sweeping directions.

28. The method according to claim 26 or 27, wherein when a quantity of the one or more beam sweeping directions is n, and the quantity of pilot resources configured by using the first configuration information is m, a sequence number j of a beam sweeping direction corresponding to the $i^{th}$ pilot resource in the pilot resources configured by using the first configuration information satisfies:

$$j = i * floor(n/m),$$

wherein m and n are positive integers, i is a positive integer less than or equal to m, and floor represents a floor operation.

29. The method according to any one of claims 16 to 28, wherein the method further comprises:
transmitting, by the base station, the first information to a positioning device in a core network.

30. The method according to claim 29, wherein the method further comprises:
receiving, by the base station, the reference information of the first information indicated by the positioning device in the core network and/or an access and mobility management function AMF, wherein the first information is determined by the base station by using the reference information according to the rule specified in the protocol.

**31.** The method according to claim 30, wherein the method further comprises:
transmitting, by the base station, a response to the positioning device in the core network and/or the AMF, wherein the response is used to indicate that the base station configures the first information with reference to the reference information.

**32.** The method according to any one of claims 16 to 31, wherein the first pilot signal comprises one or more of following signals: a sounding reference signal SRS, an SRS used for positioning, a positioning reference signal PRS, a channel state information reference signal CSI-RS, a tracking reference signal TRS, a demodulation reference signal DMRS, a synchronization signal block SSB, a physical broadcast channel PBCH, a primary synchronization signal PSS, or a secondary synchronization signal SSS.

**33.** A wireless communication method, comprising:
receiving, by a positioning device in a core network, first information, wherein the first information is used to indicate a correspondence between one or more beam sweeping directions and one or more time domain locations.

**34.** The method according to claim 33, wherein the first information comprises first indication information, the first indication information is used to indicate whether the correspondence for a neighboring cell is based on the same reference information as that for a serving cell, and the first information is determined based on the reference information according to a rule specified in a protocol.

**35.** The method according to claim 33 or 34, wherein the first information comprises one or more of following:

the correspondence between the one or more beam sweeping directions and the one or more time domain locations; or
a correspondence between the one or more beam sweeping directions and one or more pilot resources.

**36.** The method according to any one of claims 33 to 35, wherein the one or more beam sweeping directions are one or more beam transmission directions.

**37.** The method according to any one of claims 33 to 36, wherein the first information is used to indicate one or more groups of correspondences, and each group in the one or more groups of correspondences is used to indicate the correspondence between the one or more beam sweeping directions and the one or more time domain locations.

**38.** The method according to claim 37, wherein the first information is used to indicate a plurality of groups of correspondences, and the first information further comprises a group sequence number of each group in the plurality of groups of correspondences.

**39.** The method according to any one of claims 33 to 38, wherein the first information is configured by a base station, or the first information is predefined in a protocol.

**40.** The method according to any one of claims 33 to 39, wherein the method further comprises:
indicating, by the positioning device in the core network, reference information of the first information to a base station, wherein the first information is determined by the base station by using the reference information according to the rule specified in the protocol.

**41.** The method according to claim 40, wherein the method further comprises:
receiving, by the positioning device in the core network, a response transmitted by the base station, wherein the response is used to indicate that the base station configures the first information with reference to the reference information.

**42.** The method according to any one of claims 33 to 41, wherein the first pilot signal comprises one or more of following signals: a sounding reference signal SRS, an SRS used for positioning, a positioning reference signal PRS, a channel state information reference signal CSI-RS, a tracking reference signal TRS, a demodulation reference signal DMRS, a synchronization signal block SSB, a physical broadcast channel PBCH, a primary synchronization signal PSS, or a secondary synchronization signal SSS.

**43.** A communications apparatus, wherein the communications apparatus is a terminal device, and the communications apparatus comprises:
a communications module, transmitting/receiving a first pilot signal, wherein a resource for transmitting/receiving the first pilot signal is determined based on first information, and the first information is used to indicate a correspondence between one or more beam sweeping directions and one or more time domain locations.

**44.** The communications apparatus according to claim 43, wherein the first information comprises first indication information, the first indication information is used to indicate whether the correspondence for a neighboring cell is based on the same reference information as that for a serving cell, and the first information is determined based on the reference information according to a rule specified in a protocol.

**45.** The communications apparatus according to claim 44, wherein the first information is determined by the terminal device by using the reference information according to the rule specified in the protocol.

**46.** The communications apparatus according to any one of claims 43 to 45, wherein the first information comprises one or more of following:

the correspondence between the one or more beam sweeping directions and the one or more time domain locations; or
a correspondence between the one or more beam sweeping directions and one or more pilot resources.

**47.** The communications apparatus according to any one of claims 43 to 46, wherein the one or more beam sweeping directions are one or more beam transmission directions.

**48.** The communications apparatus according to any one of claims 43 to 47, wherein the first information is used to indicate one or more groups of correspondences, and each group in the one or more groups of correspondences is used to indicate the correspondence between the one or more beam sweeping directions and the one or more time domain locations.

**49.** The communications apparatus according to claim 48, wherein the terminal device belongs to a first terminal device group, and all terminal devices in the first terminal device group determine, by using the same group of correspondences, a resource for transmitting/receiving the first pilot signal.

**50.** The communications apparatus according to claim 48, wherein the terminal device belongs to a first terminal device group, and all or a part of terminal devices in the first terminal device group determine, by using different groups of correspondences, a resource for transmitting/receiving the first pilot signal.

**51.** The communications apparatus according to any one of claims 48 to 50, wherein the first information is used to indicate a plurality of groups of correspondences, and the first information further comprises a group sequence number of each group in the plurality of groups of correspondences.

**52.** The communications apparatus according to any one of claims 43 to 51, wherein the first information is configured by a base station, or the first information is predefined in a protocol.

**53.** The communications apparatus according to any one of claims 43 to 52, wherein the communications apparatus further comprises:

a first receiving module, receiving first configuration information, wherein the first configuration information is used to configure one or more of following: one or more pilot resources, information about a quantity of actually transmitted pilot beams, or information about a quantity of pilot resources, and
the first pilot signal is determined based on the first information and the first configuration information.

**54.** The communications apparatus according to claim 53, wherein the one or more pilot resources configured by using the first configuration information correspond to the one or more beam sweeping directions.

**55.** The communications apparatus according to claim 53 or 54, wherein when a quantity of the one or more beam sweeping directions is n, and the quantity of pilot resources configured by using the first configuration information is m, a sequence number j of a beam sweeping direction corresponding to the $i^{th}$ pilot resource in the pilot resources configured by using the first configuration information satisfies:

$$j = i * \mathrm{floor}(n/m),$$

wherein m and n are positive integers, i is a positive integer less than or equal to m, and floor represents a floor operation.

**56.** The communications apparatus according to any one of claims 43 to 55, wherein a direction of transmitting/receiving the first pilot signal is determined based on a direction of a downlink pilot signal detected by the terminal device.

**57.** The communications apparatus according to any one of claims 43 to 56, wherein the first pilot signal comprises one or more of following signals: a sounding reference signal SRS, an SRS used for positioning, a positioning reference signal PRS, a channel state information reference signal CSI-RS, a tracking reference signal TRS, a demodulation reference signal DMRS, a synchronization signal block SSB, a physical broadcast channel PBCH, a primary synchronization signal PSS, or a secondary synchronization signal SSS.

**58.** A communications apparatus, wherein the communications apparatus is a base station, and the communications apparatus comprises:
a communications module, receiving a first pilot signal transmitted by a terminal device, or transmitting a first pilot signal to a terminal device, wherein a resource for receiving/transmitting the first pilot signal is determined based on first information, and the first information is used to indicate a correspondence between one or more beam sweeping directions and one or more time domain locations.

59. The communications apparatus according to claim 58, wherein the first information comprises first indication information, the first indication information is used to indicate whether the correspondence for a neighboring cell is based on the same reference information as that for a serving cell, and the first information is determined based on the reference information according to a rule specified in a protocol.

60. The communications apparatus according to claim 59, wherein the first information is determined by the base station by using the reference information according to the rule specified in the protocol.

61. The communications apparatus according to any one of claims 58 to 60, wherein the first information comprises one or more of following:

the correspondence between the one or more beam sweeping directions and the one or more time domain locations; or
a correspondence between the one or more beam sweeping directions and one or more pilot resources.

62. The communications apparatus according to any one of claims 58 to 61, wherein the one or more beam sweeping directions are one or more beam transmission directions.

63. The communications apparatus according to any one of claims 58 to 62, wherein the first information is used to indicate one or more groups of correspondences, and each group in the one or more groups of correspondences is used to indicate the correspondence between the one or more beam sweeping directions and the one or more time domain locations.

64. The communications apparatus according to claim 63, wherein the terminal device belongs to a first terminal device group, and all terminal devices in the first terminal device group determine, by using the same group of correspondences, a resource for transmitting/receiving the first pilot signal.

65. The communications apparatus according to claim 63, wherein the terminal device belongs to a first terminal device group, and all or a part of terminal devices in the first terminal device group determine, by using different groups of correspondences, a resource for transmitting/receiving the first pilot signal.

66. The communications apparatus according to any one of claims 63 to 65, wherein the first information is used to indicate a plurality of groups of correspondences, and the first information further comprises a group sequence number of each group in the plurality of groups of correspondences.

67. The communications apparatus according to any one of claims 58 to 66, wherein the first information is configured by the base station, or the first information is predefined in a protocol.

68. The communications apparatus according to any one of claims 58 to 67, wherein the communications apparatus further comprises:

a first transmitting module, transmitting first configuration information to the terminal device, wherein the first configuration information is used to configure one or more of following: one or more pilot resources, information about a quantity of actually transmitted pilot beams, or information about a quantity of pilot resources, and
wherein the first pilot signal is determined based on the first information and the first configuration information.

69. The communications apparatus according to claim 68, wherein the one or more pilot resources configured by using the first configuration information correspond to the one or more beam sweeping directions.

70. The communications apparatus according to claim 68 or 69, wherein when a quantity of the one or more beam sweeping directions is n, and the quantity of pilot resources configured by using the first configuration information is m, a sequence number j of a beam sweeping direction corresponding to the $i^{th}$ pilot resource in the pilot resources configured by using the first configuration information satisfies:

$$j = i * \text{floor}(n/m),$$

wherein m and n are positive integers, i is a positive integer less than or equal to m, and floor represents a floor operation.

71. The communications apparatus according to any one of claims 58 to 70, wherein the communications apparatus further comprises:

a second transmitting module, transmitting the first information to the positioning device in the core network.

72. The communications apparatus according to claim 71, wherein the communications apparatus further comprises:
a receiving module, receiving reference information of the first information indicated by the positioning device in the core network and/or an access and mobility management function AMF, wherein the first information is determined by the base station by using the reference information according to the rule specified in the protocol.

73. The communications apparatus according to claim 72, wherein the communications apparatus further comprises:
a third transmitting module, transmitting a response to the positioning device in the core network and/or the AMF, wherein the response is used to indicate that the base station configures the first information with reference to the reference information.

74. The communications apparatus according to any one of claims 58 to 73, wherein the first pilot signal comprises one or more of following signals: a sounding reference signal SRS, an SRS used for positioning, a positioning reference signal PRS, a channel state information reference signal CSI-RS, a tracking reference signal TRS, a demodulation reference signal DMRS, a synchronization signal block SSB, a physical broadcast channel PBCH, a primary synchronization signal PSS, or a secondary synchronization signal SSS.

75. A communications apparatus, wherein the communications apparatus is a positioning device in a core network, and the communications apparatus comprises:
a first receiving module, receiving first information, wherein the first information is used to indicate a correspondence between one or more beam sweeping directions and one or more time domain locations.

76. The communications apparatus according to claim 75, wherein the first information comprises first indication information, the first indication information is used to indicate whether the correspondence for a neighboring cell is based on the same reference information as that for a serving cell, and the first information is determined based on the reference information according to a rule specified in a protocol.

77. The communications apparatus according to claim 75 or 76, wherein the first information comprises one or more of following:

the correspondence between the one or more beam sweeping directions and the one or more time domain locations; or
a correspondence between the one or more beam sweeping directions and one or more pilot resources.

78. The communications apparatus according to any one of claims 75 to 77, wherein the one or more beam sweeping directions are one or more beam transmission directions.

79. The communications apparatus according to any one of claims 75 to 78, wherein the first information is used to indicate one or more groups of correspondences, and each group in the one or more groups of correspondences is used to indicate the correspondence between the one or more beam sweeping directions and the one or more time domain locations.

80. The communications apparatus according to claim 79, wherein the first information is used to indicate a plurality of groups of correspondences, and the first information further comprises a group sequence number of each group in the plurality of groups of correspondences.

81. The communications apparatus according to any one of claims 75 to 80, wherein the first information is configured by a base station, or the first information is predefined in a protocol.

82. The communications apparatus according to any one of claims 75 to 81, wherein the communications apparatus further comprises:
an indication module, indicating reference information of the first information to a base station, wherein the first information is determined by the base station by using the reference information according to a rule specified in a protocol.

83. The communications apparatus according to claim 82, wherein the communications apparatus further comprises:
a second receiving module, receiving a response transmitted by the base station, wherein the response is used to indicate that the base station configures the first information with reference to the reference information.

84. The communications apparatus according to any one of claims 75 to 83, wherein the first pilot signal comprises one or more of following signals: a sounding reference signal SRS, an SRS used for positioning, a positioning reference signal PRS, a channel state information reference signal CSI-RS, a tracking reference signal TRS, a demodulation reference signal DMRS, a synchronization signal block SSB, a physical broadcast channel PBCH, a primary synchronization signal PSS, or a secondary synchronization signal SSS.

85. A communications apparatus, comprising a memory, a processor, and a transceiver, wherein the memory is configured to store a program, and the processor is configured to invoke the program in the memory, so that the communications apparatus executes the method according to any one of claims 1 to 15, claims 16 to 32, or claims 33 to 42.

86. An apparatus, comprising a processor, invoking a program from a memory, so that the apparatus executes the method according to any one of claims 1 to 42.

87. A chip, comprising a processor, invoking a program from a memory to cause a device installed with the chip to execute the method according to any one of claims 1 to 42.

88. A computer-readable storage medium, wherein the computer-readable storage medium stores a program, and the program causes a computer to execute the method according to any one of claims 1 to 42.

89. A computer program product, comprising a program, wherein the program causes a computer to execute the method according to any one of claims 1 to 42.

90. A computer program, wherein the computer program causes a computer to execute the method according to any one of claims 1 to 42.

100

FIG. 1

FIG. 2

| Base station | S310: First pilot signal | Terminal device |

FIG. 3

FIG. 4

FIG. 5

| Base station | | Terminal device |
|---|---|---|

S610: First configuration information

S620: First pilot signal

FIG. 6

First time domain location

First time domain location

Second time domain location

Second time domain location

Third time domain location

Third time domain location

FIG. 7

| Base station | | Terminal device |
|---|---|---|

S810: Configure one or more SRS resources

S820: Detect a downlink pilot signal

S830: Determine an SRS that needs to be transmitted

S840: Determine a time domain location for transmitting the SRS

S850: SRS signal

FIG. 8

Communications apparatus 900

Communications module 910

First receiving module 920

FIG. 9

Communications apparatus 1000

Communications module 1010

First transmitting module 1020

FIG. 10

Communications apparatus 1100

First receiving module 1110

Indication module 1120

FIG. 11

Apparatus 1200

Processor 1210

Memory 1220

Transceiver 1230

FIG. 12

## INTERNATIONAL SEARCH REPORT

| International application No. |
| --- |
| **PCT/CN2023/097424** |

| A. | CLASSIFICATION OF SUBJECT MATTER |
| --- | --- |

H04W40/00(2009.01)i;  H04W 72/0446(2023.01)i

According to International Patent Classification (IPC) or to both national classification and IPC

| B. | FIELDS SEARCHED |
| --- | --- |

Minimum documentation searched (classification system followed by classification symbols)

IPC：H04W

Documentation searched other than minimum documentation to the extent that such documents are included in the fields searched

Electronic data base consulted during the international search (name of data base and, where practicable, search terms used)

CNABS: CNTXT; CNKI; VEN; WOTXT; USTXT; EPTXT; 3GPP: 导频信号, 定位参考信号, 探测参考信号, 资源, 波束方向, PRS, SRS, resource, beam direction

| C. | DOCUMENTS CONSIDERED TO BE RELEVANT | |
| --- | --- | --- |

| Category* | Citation of document, with indication, where appropriate, of the relevant passages | Relevant to claim No. |
| --- | --- | --- |
| X | HUAWEI et al. "Angle Resolution and Beam Configuration Related Procedures for NR Positioning" *3GPP TSG RAN WG1 Meeting #98bis, R1-1910393*, 05 October 2019 (2019-10-05), text, pages 1-7 | 1-90 |
| X | WO 2022194144 A1 (VIVO MOBILE COMMUNICATION CO., LTD.) 22 September 2022 (2022-09-22) description, pages 2-76 | 1-90 |
| A | CN 111565414 A (HUAWEI TECHNOLOGIES CO., LTD.) 21 August 2020 (2020-08-21) entire document | 1-90 |
| A | CN 114666828 A (HUAWEI TECHNOLOGIES CO., LTD.) 24 June 2022 (2022-06-24) entire document | 1-90 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **24 November 2023** | **05 December 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/097424**

| Patent document cited in search report | | | Publication date (day/month/year) | Patent family member(s) | Publication date (day/month/year) |
|---|---|---|---|---|---|
| WO | 2022194144 | A1 | 22 September 2022 | None | |
| CN | 111565414 | A | 21 August 2020 | None | |
| CN | 114666828 | A | 24 June 2022 | None | |

Form PCT/ISA/210 (patent family annex) (July 2022)